# FASCICULE DE BREVET EUROPEEN

(11) **EP 1 653 411 B1**
(45) Date de publication et mention de la délivrance du brevet: **23.07.2008**
(21) Numéro de dépôt: 04292530.5
(22) Date de dépôt: 26.10.2004
(51) Int. Cl.: G06T 17/40

(54) **Procédé et programme de reconstruction de plan de fracture**
Verfahren und Computerprogramm zur Fehleroberflächenkonstruktion
Method and computer program of fault surface reconstruction

(43) Date de publication de la demande: 03.05.2006
(73) Titulaire: Total S.A., 92400 Courbevoie (FR)
(72) Inventeur: Keskes, Naamen c/o Total S.A., 64018 Pau Cedex (FR); Guillon, Sébastien c/o Total S.A., 64018 Pau Cedex (FR); Berthoumieu, Yannick c/o Enseirb, 33402 Talence Cedex (FR); Donias, Marc c/o Enseirb, 33402 Talence Cedex (FR)
(74) Mandataire: Hirsch & Associés

(56) Documents cités:
- US-A- 6 014 343
- REINHARDT J M ET AL: "Cue-based segmentation of 4D cardiac image sequences" COMPUTER VISION AND IMAGE UNDERSTANDING ACADEMIC PRESS USA, vol. 77, no. 2, février 2000 (2000-02), pages 251-262, XP002323682 ISSN: 1077-3142
- PETERSON M P: "ACTIVE LEGENDS FOR INTERACTIVE CARTOGRAPHIC ANIMATION" INTERNATIONAL JOURNAL OF GEOGRAPHICAL INFORMATION SCIENCE, LONDON, GB, vol. 13, no. 4, juin 1999 (1999-06), pages 375-383, XP009045692 ISSN: 1365-8816
- PETERSON M P: "Spatial visualization through cartographic animation: theory and practice" GIS/LIS PROCEEDINGS AMERICAN SOC. PHOTOGRAMMETRY & REMOTE SENSING BETHESDA, MD, USA, 27 octobre 1994 (1994-10-27), pages 619-628, XP009045660

## Description

La présente invention concerne la reconstruction d'un plan de fracture dans un ensemble tridimensionnel de mesures, appelé bloc tridimensionnel par la suite. Elle se rapporte aux domaines de la géologie, de la sismique, de l'imagerie médicale ou à tout domaine utilisant des techniques d'imagerie.

Il est connu, notamment dans l'exploration pétrolière, de déterminer la position des réservoirs pétroliers à partir de l'interprétation de mesures géophysiques effectuées depuis la surface du sol ou bien dans des puits de forage. Ces mesures impliquent typiquement l'émission dans le sous-sol d'une onde et la mesure des diverses réflexions de l'onde sur les structures géologiques recherchées - surfaces séparant des matériaux distincts, fractures, etc.

On appelle "pointé" en géophysique le suivi d'un marqueur sismique sur les images ou sections sismiques fournies par traitement des mesures sismiques obtenues par l'acquisition sismique. Un marqueur sismique se situe toujours à la frontière entre deux structures géologiques de nature différente ou, en d'autres termes, entre deux faciès.

Le plus souvent, les marqueurs s'alignent sur des horizons sismiques. Les méthodes traditionnelles consistent à suivre manuellement les horizons sismiques en pointant les points faisant partie d'un horizon donné, puis en les reliant entre eux. Quelques méthodes de propagation automatique ont été proposées pour le pointé d'horizons sismiques ; leur objectif est de permettre, à partir d'un ou plusieurs points représentatifs de l'horizon de déterminer automatiquement d'autres marqueurs sismiques semblables.

Un marqueur sismique peut aussi indiquer un plan de fracture. Cependant, seuls des outils de pointé manuel sont disponibles à ce jour pour le pointé des fractures. Ces outils affichent une section sismique, à la demande de l'utilisateur, et permettent à l'utilisateur de cliquer sur les marqueurs de la fracture de la section affichée. A la demande, l'utilisateur peut afficher successivement les différentes sections, une par une; sur chacune des sections, l'utilisateur peut cliquer sur les marqueurs de la fracture. Il s'agit d'un pointé statique, indépendant sur chacune des sections affichées. Un tel outil est par exemple fourni par la société Schlumberger sous la référence Charisma. Notons qu'une faille est un type de fracture présentant un décalage important, appelé rejet, entre les deux parties de part et d'autre de la fracture.

Le pointé manuel de fracture manque d'efficacité dans le cas où la donnée, à savoir le bloc tridimensionnel, est de mauvaise qualité, c'est-à-dire qu'il présente un faible rapport signal à bruit. Il est en effet difficile de détecter les points d'une fracture sur une section donnée lorsque cette section présente un faible rapport signal à bruit. La sélection des points de la fracture est dans ce cas difficile sur chacune des sections, prises indépendamment les unes des autres. Une autre difficulté est le suivi de la fracture, lors de l'affichage des différentes; l'utilisateur peut notamment confondre des fractures proches. En outre, des points n'appartenant pas à la fracture peuvent être sélectionnés, erreur qui risque de multiplier les difficultés lors de la reconstruction de la surface de la fracture à partir des points sélectionnés dans les différentes sections.

On connaît le document US-A- 6 014 343 qui divulgue un procédé de reconstruction d'un plan de fracture dans un ensemble tridimensionnel de valeurs, lequel ensemble est fourni à un ordinateur en vue d'opérations sur les valeurs.

On connaît aussi un procédé de segmentation d'image nécessitant une interaction avec un utilisateur, dans lequel est fourni une séquence de volumes à un ordinateur en vue d'un traitement ultérieur. Tout d'abord, lors d'une étape initiale interactive, l'utilisateur définit des informations, c'est-à-dire des noms de région et des indices ou informations d'images pour quelques volumes de la séquence, c'est-à-dire en certains points de la séquence. Ensuite, les indices sont complétés automatiquement pour les autres points de la séquence pour être ensuite traités selon un procédé automatisé (Reinhardt, J. M., Wang, A. J., Weldon, T. P., and Higgins, W. E.: "Cue-based segmentation of 4D cardiac image sequences", Computer Vision and Image Understanding, Academic Press, USA, vol. 77, no. 2, Feb. 2000, 251-262, XP002323682). On pourra en particulier se référer à l'article de Hansen, M. W. and Higgins, W. E. 1997. Relaxation Methods for Supervised Image Segmentation. IEEE Trans. Pattern Anal. Mach. Intell. 19, 9 (Sep. 1997), 949-962.

On connaît par ailleurs des légendes actives dans l'animation cartographique qui permettent d'améliorer la perception par l'utilisateur. En particulier, des d'animations peuvent améliorer la perception visuelle par l'utilisateur (Peterson M. P.: "Active legends for interactive cartographic animation", International Journal of Geographical Information Science, London, GB, Vol. 13, no. 4, 1 June 1999 (1999 - 06), pp. 375-383, XP009045692, ISSN: 1365 - 8816).

Il est proposé en conséquence un procédé de reconstruction d'un plan de fracture dans un ensemble tridimensionnel de valeurs, comprenant les étapes de :
- fourniture à un ordinateur de l'ensemble tridimensionnel;
- affichage par l'ordinateur d'une succession de sections planes de l'ensemble tridimensionnel;
- sélection par l'utilisateur de points du plan de fracture sur certaines de ces sections pendant leur affichage ; et de
- reconstruction par l'ordinateur du plan de fracture à partir des points sélectionnés,
   dans lequel le procédé comprend en outre une étape de fourniture par l'utilisateur d'une trajectoire (40) à l'aide de balises dans le bloc tridimensionnel (20), l'affichage des sections (10) à l'étape d'affichage étant orthogonalement à la trajectoire (40) fournie.

On peut prévoir que l'étape d'affichage comprend l'affichage des sections à une même échelle.

Le procédé peut aussi présenter l'une ou plusieurs des caractéristiques ou étapes suivantes :
- l'étape d'affichage comprend l'affichage des sections à une vitesse supérieure à 5 images par seconde, et de préférence entre 10 et 20 images par seconde;
- une étape de choix par l'utilisateur de la distance entre deux sections successives;
- une étape de mémorisation des sélections de points et une répétition des étapes d'affichage et de sélection pendant lesquelles les points mémorisés sont affichés;
- une étape d'édition des points sélectionnés;
- les étapes de sélection des points et de reconstruction de la fracture sont simultanées;
   une étape d'affichage de la fracture reconstruite, par exemple par masquage par un plan de coupe d'une partie de la surface ou par déplacement du plan de coupe.

Il est proposé encore un programme d'ordinateur enregistré sur un support lisible par ordinateur, comprenant du code de programme adapté à la mise en oeuvre sur un ordinateur de l'ensemble des étapes de ce procédé. Enfin, il est proposé un système comprenant des moyens adaptés à la mise en oeuvre de ceprogramme, une unité logique de traitement du programme et une unité d'affichage et une unité d'entrée sortie permettant un pointage sur l'unité d'affichage.

D'autres caractéristiques et avantages du procédé apparaîtront à la lecture de la description détaillée qui suit et des modes de réalisation, donnés à titre d'exemple uniquement et en référence aux dessins qui montrent :
- figure 1, une représentation schématique d'une section d'un bloc tridimensionnel, dans un système de l'état de la technique;
- figure 2, une représentation schématique d'une section orthogonale d'un bloc tridimensionnel, dans un système de l'état de la technique;
- figure 3, une représentation similaire à celle de la figure 1, mais montrant les données sismiques dans le plan de la section;
- figure 4, une vue en perspective d'un horizon présentant une fracture, avec une représentation schématique des sections successivement affichées à l'utilisateur selon l'invention;
- figures 5 à 7, des vues schématiques des sections de la figure 4;
- figure 8, une représentation schématique d'une trajectoire prédéfinie de la coupe pour le mode d'acquisition de points de l'invention;
- figure 9, une représentation schématique des différentes étapes du procédé de l'invention;
- figures 10, 11 et 12, une illustration des étapes et des résultats du procédé de l'invention.

Il est proposé un procédé de reconstruction d'un plan de fracture. Le procédé utilise l'affichage de sections successives à l'utilisateur, en permettant à l'utilisateur de pointer au cours de l'affichage. Ce pointé dynamique permet à l'utilisateur de mieux suivre les marqueurs sur les sections successives.

Les exemples développés ci-après pour illustrer les revendications appartiennent en général au domaine de la sismique. Des exemples similaires peuvent être extraits d'autres domaines techniques.

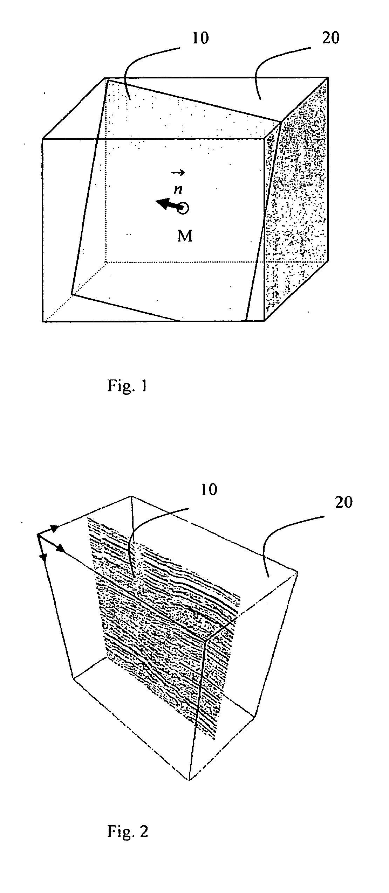

La figure 1 représente un schéma d'un bloc tridimensionnel 20 et d'une section 10 recoupant le bloc. Le bloc tridimensionnel de données est constitué d'un ensemble de points inscrits dans un volume déterminé et affecté de valeurs obtenues à la suite de transformations opérées sur les mesures acquises dans ce volume de points.

Le procédé comprend d'abord la fourniture du bloc tridimensionnel 20 de données à un ordinateur. Il comprend également une étape d'affichage par l'ordinateur d'une succession de sections 10 planes du bloc tridimensionnel 20 de mesures. Les sections successives sont affichées à l'attention de l'utilisateur, sans que l'utilisateur ne doive lui-même commander l'affichage de la section suivante.

Les sections 10 correspondent à des coupes ou des parties de coupes du bloc tridimensionnel 20. Les sections 10 contiennent ainsi des points du bloc tridimensionnel 20 auxquels sont affectées des valeurs. La phase d'affichage est réalisée de telle sorte que les sections 10 sélectionnées et leur vitesse d'affichage permettent un suivi par l'utilisateur des déplacements des points du bloc tridimensionnel 20 appartenant à la limite de la fracture sur des sections 10 successives.

Une succession de sections 10 planes du bloc tridimensionnel 20 sera appelée séquence dans la suite de la description.

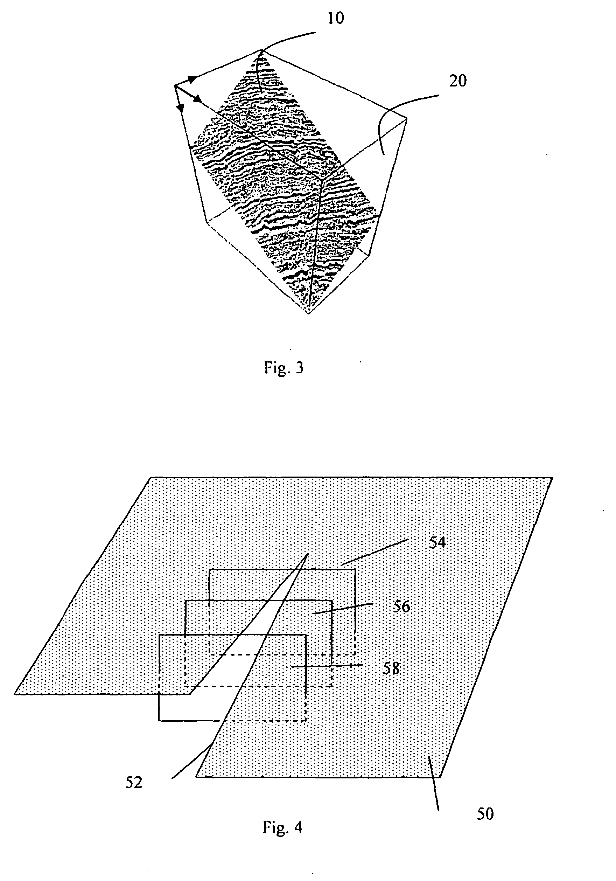

Les figures 4 à 7 donnent un exemple d'horizon avec une fracture et montre les sections successivement affichées à l'utilisateur.

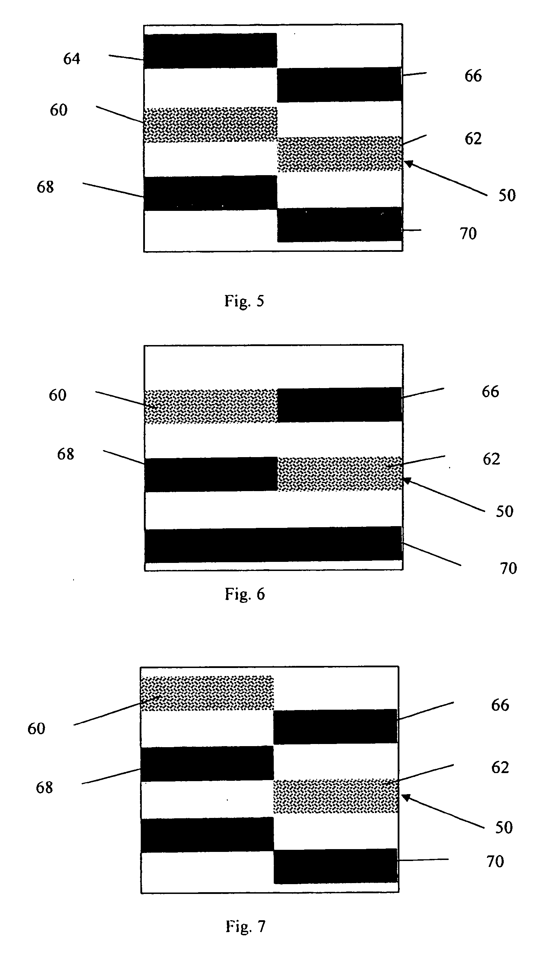

La figure 4 montre une vue en perspective d'un horizon 50, qui présente une fracture 52; la figure 4 montre en outre les différentes sections 54, 56 et 58 affichées successivement à l'utilisateur et représentées aux figures 5 à 8. Dans l'exemple des figures 4 à 7, les sections sont affichées à l'utilisateur en reculant de l'arrière de la figure 4 vers l'avant de la figure 4. Dans l'exemple, la trajectoire est parallèle au compartiment de droite de la figure 4 - de sorte que la partie droite des figures 5 à 7 paraît immobile à l'utilisateur. La trajectoire est en outre orthogonale au plan de vue, comme expliqué plus bas.

La figure 5 montre une vue schématique de la première section 54 affichée à l'utilisateur. Cette vue est schématique : d'une part, elle ne représente que les marqueurs au voisinage de la fracture, d'autre part, les marqueurs sont représentés schématiquement et en teintes différentes, pour faciliter la compréhension. La figure 5 montre en grisé l'horizon 50 et en noir les marqueurs des horizons supérieur et inférieur adjacents. Le décalage vertical entre les marqueurs sur la partie gauche de la figure 5 et les marqueurs sur la partie droite de la figure est représentatif du rejet de la fracture. L'horizon 50 est donc représenté par deux marqueurs 60 et 62, tandis que les horizons supérieur et inférieur sont respectivement représentés par deux marqueurs 64 et 66 d'une part et 68 et 70 d'autre part. Il est relativement facile sur la section de la figure 5 de suivre un horizon, c'est-à-dire de reconnaître que les marqueurs 60 et 62 représentent un même horizon, tout comme les marqueurs 64 et 66 ou les marqueurs 68 et 70. En effet, le décalage entre les marqueurs est inférieur à la distance entre deux marqueurs adjacents.

La figure 6 montre une vue schématique de la deuxième section 56. On retrouve sur la figure les marqueurs déjà représentés à la figure 5, qui sont repérés par les mêmes références numériques. Du fait du décalage croissant entre les marqueurs de part et d'autre de la fracture, le marqueur 60 de l'horizon 50, sur la gauche de la figure se trouve en face du marqueur 66 de l'horizon adjacent supérieur; de même, le marqueur 62 de l'horizon 50, sur la droite de la figure, se trouve en face du marqueur 68 de l'horizon adjacent inférieur. Sur cette figure, sans la représentation schématique des horizons en teintes différentes, il serait très difficile à l'utilisateur de suivre ou pointer l'horizon 50, c'est-à-dire de reconnaître que les deux marqueurs correspondants sont les marqueurs 60 et 62 - et non pas les marqueurs 60 et 66 ou encore les marqueurs 68 et 62.

La figure 7 montre une vue schématique de la troisième section 58, avec les mêmes références numériques qu'aux figures 5 et 6. Le décalage entre les marqueurs de part et d'autre de la figure s'est encore accentué. Comme sur la figure 6, sans la représentation schématique des horizons en teintes différentes, il serait très difficile à l'utilisateur de suivre ou pointer l'horizon 50.

L'affichage successif à l'utilisateur des différentes sections permet en revanche un suivi et un pointé efficace des marqueurs. De fait, l'utilisateur voit d'abord la section de la figure 5, puis successivement les sections des figures 6 et 7. La perception du mouvement des marqueurs entre les sections successives permet à l'utilisateur de "suivre" les marqueurs de l'horizon 50, sans risque de confusion avec les marqueurs adjacents.

Le procédé comprend en outre une étape de sélection de points par l'utilisateur, c'est-à-dire un pointé du plan de fracture sur certaines sections 10 pendant leur affichage. L'utilisateur peut procéder à un pointé sur chacune des sections, ou simplement sur certaines d'entre elles.

La tâche principale de l'observateur est l'acquisition d'un ensemble de points représentant le plan de fracture. Il est aidé en cela par le mode d'affichage et d'observation de la donnée qui optimise la sélection des points. En particulier, l'affichage dynamique des sections facilite les tâches de repérage des points et ainsi de leur sélection, i.e. le pointé.

Le procédé comprend également une étape de reconstruction du plan de fracture par l'ordinateur à partir des points sélectionnés par l'utilisateur.

Le procédé améliore considérablement la solution de l'art antérieur en affichant une séquence. Principalement, l'animation ou l'affichage successif des sections permet une meilleure perception des événements sismiques, en particulier du plan de fracture recherché, grâce à l'effet de rémanence visuelle. En effet, dans des environnements bruités, l'oeil est très sensible aux mouvements et l'animation est un excellent moyen d'analyse de la donnée sismique par perception visuelle. Autoriser le pointé durant cette phase d'animation est alors une aide précieuse. En outre, l'animation permet de valider rapidement des hypothèses faites lors de pointés manuels.

Les gains sont aussi valables dans un cas plus général, c'est-à-dire même si le rapport signal à bruit est satisfaisant. La détection des points appartenant au plan de fracture est alors facilitée. Ainsi, dans l'exemples des figures 4 à 7, le rapport signal à bruit est satisfaisant; l'affichage et le pointé améliorent néanmoins le suivi de la fracture.

Grâce à une mise à jour permanente du contenu visuel, l'animation permet d'exploiter les facultés de la perception visuelle, en particulier sa rémanence. Dans une séquence, la perception visuelle détecte aisément une fracture qui peut être difficilement décelable en vision statique, en particulier dans le cas de sismiques à faible rapport signal à bruit. En effet, les micromouvements continus de l'oeil face à une animation assurent une meilleure perception des contrastes et, par là même, des déplacements d'un plan de fracture contenue dans l'animation, niveau de perception impossible à obtenir avec des images statiques.

Des études psycho-visuelles ont permis de mesurer l'influence de la vitesse d'affichage des images (sections 10) sur la détection et la sélection de points du plan de fracture, objet du procédé. Une vitesse supérieure à 5 images par seconde est préférable pour que la perception visuelle humaine soit sensible à l'animation. Ces mêmes études montrent qu'une animation supérieure à 10 images par seconde est idéale en matière de détection des contours virtuels, notamment des fractures en sismique. En fait, la vitesse d'affichage peut aussi être fonction de la précision du pointé. Plus la vitesse est élevée, plus le temps disponible à l'utilisateur pour un pointé sur une section est faible; cette diminution du temps pour chaque pointé peut nuire à la précision du pointé. Une plage idéale de 10 à 20 images par seconde peut être retenue, notamment en matière de détection de fracture. Il est à noter que la vitesse est avantageusement réglable par l'utilisateur.Ce réglage de la vitesse peut impliquer un réglage de l'intervalle de temps entre l'affichage des sections successives de la séquence.

Il est aussi possible d'offrir à l'utilisateur l'opportunité de régler la distance séparant deux sections successives; un tel réglage permet notamment un meilleur suivi et une adaptation en fonction de la nature des perturbations. Ainsi, dans l'exemple des figures 4 à 7, on part d'une section (non représentée) dans laquelle la fracture n'est pas présente et dans laquelle les marqueurs sont parallèles; on comprend qu'il est utile d'afficher la section de la figure 5 avant d'afficher la section de la figure 7, pour permettre à l'utilisateur de percevoir la présence de la fracture. Il est donc avantageux que l'utilisateur puisse régler la distance entre les sections successives.

Ces deux réglages peuvent être indépendants - la variation de la vitesse d'affichage s'effectuant en préservant une distance constante entre deux sections, ou la variation de la distance s'effectuant en maintenant une durée identique entre l'affichage de deux sections. On peut aussi permettre à l'utilisateur de régler simultanément la vitesse d'affichage et la distance entre les sections. Par exemple, on peut considérer un bloc et imposer que la durée totale de parcours du bloc soit constante; dans ce cas, une variation de la vitesse d'affichage se traduit par une variation inversement proportionnelle de la distance entre deux sections successives.

Dans une séquence, la sélection d'un contenu visuel approprié optimise le procédé. Partant d'une donnée volumique, un contenu visuel planaire présenté à l'utilisateur est adéquat lorsqu'il fournit une observabilité optimale des plans de fracture recherchés. Pour une sélection des points pendant une séquence, sélection appelée pointé dynamique, le plan présenté est construit en s'appuyant sur le fait que la visibilité de la fracture est d'autant meilleure que l'utilisateur est situé perpendiculairement à celle-ci.

Le procédé est donc d'autant plus performant qu'il offre à l'observateur le choix des angles de vue. Le mode d'observation illustré par la figure 1 s'appuie sur la visualisation des sections 10 sur l'écran de l'unité réalisant l'affichage. La visualisation est représentée sur la figure 3. Quelles que soient la section affichée et l'orientation de son plan, la représentation de la section est coplanaire avec l'écran de l'unité d'affichage. L'affichage de la section se réalise à partir d'un point central M et de la normale n à la section dirigée selon l'axe de visée de l'observateur.

Notons que le mode de visualisation de la figure 3 est plus adapté que celui basé sur une section 10 perpendiculaire à l'un des trois axes du repère orthonormé (x, y, z) du bloc tridimensionnel 20, à savoir les modes Inline, Crossline ou Timeslice, mode de visualisation standard en sismique. La figure 2 représente une telle visualisation peu discriminante quant au plan de fracture recherché.

Le procédé vise à recueillir des points décrivant un plan de fracture sur la base d'une observation visuelle. Pour ce faire, l'observateur analyse à la volée la valeur en chaque point de la section 10 pendant l'affichage afin de réaliser sa sélection.

La tâche globale de détection de plan de fracture consiste en plusieurs sous-tâches : une analyse locale de la mesure de chaque point, une sélection des points à l'aide d'un périphérique d'acquisition et un contrôle du périphérique pour assurer un déplacement en cohérence avec l'évolution spatiale de la fracture dans le bloc tridimensionnel. Il est intéressant de diminuer le degré de complexité de la tâche globale nécessaire à la sélection. Un cloisonnement des sous-tâches issu d'un éclatement des phases de navigation d'image en image et de sélection des points peut être avantageusement utilisé. La tâche de navigation peut être déportée dans une phase amont où l'utilisateur fournit par une interface les paramètres d'une trajectoire pré-définie, voire définit un ensemble de trajectoires à l'aide de points clefs, appelés balises, dans le bloc tridimensionnel 20. Ces balises sont notées {*M*ᵢ} dans la figure 4. La trajectoire 40 fournie ou construite sur les balises devient alors le support du parcours utilisé pour la phase de sélection des points. La phase de sélection est engagée en lançant l'affichage d'une séquence orthogonale à cette trajectoire 40 dont les sections sont ordonnées selon le parcours choisi par l'utilisateur.

La trajectoire 40 peut être choisie à partir des connaissances préalables du bloc tridimensionnel 20, de son environnement, de ses propriétés ou de toute information géoréférencée.

L'affichage d'une séquence du bloc tridimensionnel 20 peut alors se faire suivant deux modes. Soit l'utilisateur décide de garder le contrôle sur le mode de visualisation et il peut ainsi alterner tâche de sélection de points avec tâche de navigation dans le bloc tridimensionnel 20 (rotation, zoom, déplacement), soit il se place en mode de navigation automatique auquel cas le repère tridimensionnel est modifié en temps réel avec le déplacement de la section 10 le long de la trajectoire 40. Dans ce dernier cas, la caméra est alors toujours positionnée orthogonalement à la section 10 et à une distance fixe de cette même section. Ce dernier mode facilite la sélection de points dans la mesure où la section 10 affichée ne se déplace pas sur l'écran ; elle apparaît fixe du fait du déplacement de la caméra. L'utilisateur peut alors se concentrer uniquement sur les mouvements relatifs de la fracture sans être gêné par les mouvements de la section 10 sur l'écran. Les sections 10 sont de plus affichées à une même échelle, ce qui permet d'éviter tout effet de vue en perspective qui nuirait à la perception des mouvements relatifs du plan de fracture lors de l'affichage d'une séquence. La sélection des points est également plus précise.

L'affichage des sections 10 peut s'effectuer selon différents parcours le long de la trajectoire 40. Le parcours est généralement effectué d'une extrémité à l'autre de la trajectoire 40. Cependant, il est également possible d'osciller entre les deux points extrémités de cette trajectoire 40. L'oscillation permet de revenir sur une zone de la fracture et de compléter une sélection préalable de points. Il est également possible de déterminer deux points intermédiaires entre lesquels de mini-oscillations auront lieu. Ces mini-oscillations permettent de concentrer l'animation sur des mini-variations de la position relative de la fracture et donc d'affiner la sélection de points.

L'utilisateur peut également contrôler le nombre d'oscillations. En effet, la présente invention comprend une étape d'arrêt par l'utilisateur des oscillations, ainsi qu'une étape de poursuite du parcours jusqu'à une prochaine phase d'oscillations ou une extrémité de la trajectoire 40.

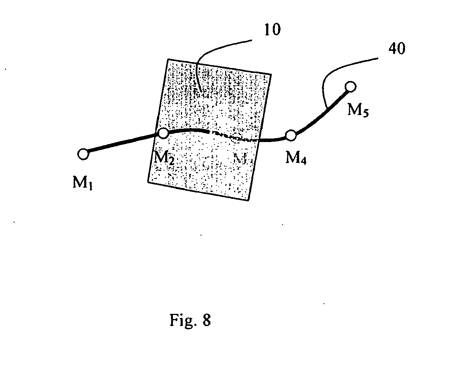

Lors de l'animation des sections 10, la distance entre deux sections 10 successives est initialement positionnée à un pixel de différence, mais elle peut être choisie par l'utilisateur. La distance peut être exprimée en pixel, voire en unités réelles lesquelles seront converties en pixels. Notons qu'une distance d'un pixel est une distance minimum permettant d'éviter toute superposition de sections 10 successives. La distance peut avantageusement être réglable par l'utilisateur, comme indiqué plus haut. Par ailleurs, le réglage de la distance et de la vitesse peut dépendre de la courbure de la trajectoire considérée; en effet, sur une trajectoire courbe, si les sections sont perpendiculaires à la trajectoire, elles ne sont pas parallèles. Lorsque l'on s'éloigne du centre de la section - dans l'exemple de la figure 8 où la trajectoire passe par le centre de la section - la distance entre deux sections successives croît. Pour garder une vue globale de la continuité entre des sections successives, il peut être avantageux de diminuer la distance entre les sections lorsque la trajectoire est courbe. Ceci peut être un réglage proposé à l'utilisateur, ou une valeur par défaut proposée à l'utilisateur en fonction de la courbure.

En outre, une forte courbure de la trajectoire 40 conjuguée à de grandes dimensions des sections 10 risquent d'engendrer une distance importante entre les bords de deux sections 10 successivement affichées. Le rayon de courbure de la trajectoire 40 définit une vitesse angulaire d'affichage. Pour une vitesse angulaire donnée, plus on s'éloigne du point-trajectoire dans le plan de la section 10, plus la distance entre deux sections 10 successives affichées est grande. C'est pourquoi soit la dimension des sections 10 affichées sera limitée par la trajectoire 40 choisie, soit la courbure de la trajectoire 40 sera limitée par la dimension des sections 10 affichées.

La sélection de points se développant le long de trajectoires pré-établies, la distribution spatiale des points sélectionnés n'est généralement pas homogène lors du premier parcours d'une trajectoire 40. Pour pallier ce problème, il est possible de construire un schéma incrémental de remplissage de l'ensemble des points sélectionnés. Ce principe implique que la phase d'acquisition puisse se faire tout en observant les points préalablement acquis lors d'une sélection antérieure. Pour ce faire, une mémorisation des sélections de points est nécessaire. La mémorisation permet dès lors d'afficher des sélections précédentes de points sur lesquelles on itérera de nouvelles sélections de points afin d'homogénéiser la densité de points sélectionnés sur la fracture. Pour ne pas perturber la visibilité par une surimposition des points situés entre la caméra et la section 10 courante, un plan d'occultation peut être placé perpendiculairement à la direction d'observation et parallèlement à la zone de sélection en cours, ce plan est dit plan de clipping.

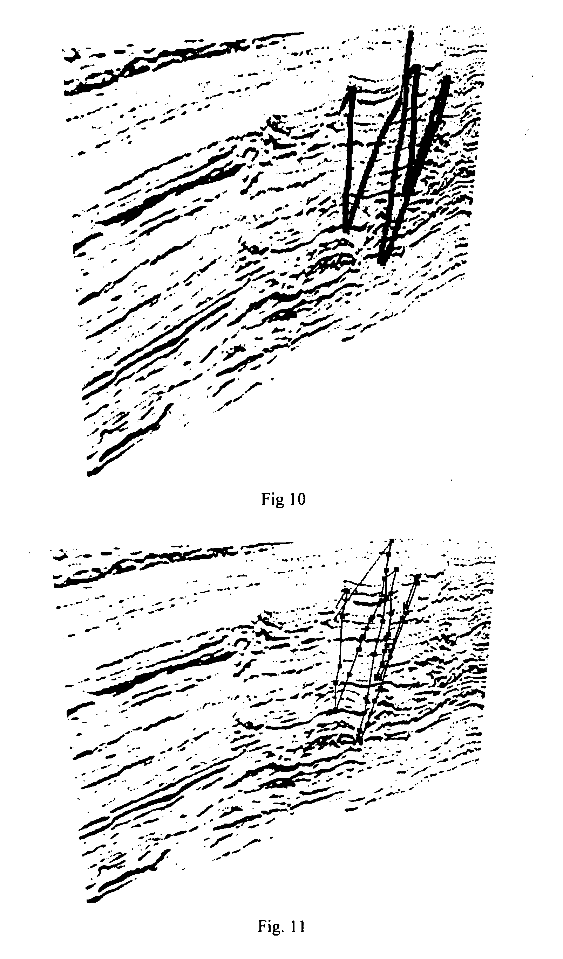

Des moyens interactifs d'extinction de certains points sélectionnés peuvent aussi être prévus. En effet, comme dans toute tâche de pointé, l'utilisateur peut parfois sélectionner des points incohérents et désirer les « éteindre » sans recommencer toute la tâche de pointé. Pour cela le nuage de points initialement pointé est simplifié par une méthode d'approximation polygonale afin de réduire le nombre de points décrivant la surface sans altérer sa morphologie (la méthode est illustrée figure 10 et 11). Enfin, une gomme interactive est prévue avec laquelle l'utilisateur sélectionne simplement les points qu'il souhaite supprimer.

Le procédé comprend une phase dédiée à la reconstruction de la fracture à partir des points sélectionnés. Le plan de fracture est alors traité comme une surface dense, ouverte ou fermée, et représentée initialement par l'ensemble de points issu de la sélection. La reconstruction fabrique une version triangulée de la surface tenant compte de l'hétérogénéité de la sélection. Deux cas peuvent être envisagés selon la confiance que l'on accorde aux pointés initiaux. Soit la surface reconstruite passe par tous les points sélectionnés, soit elle passe au mieux par l'ensemble des points. Diverses méthodes d'approximation de surface sont alors utilisées, par exemple la méthode de triangulation de Delaunay dans le premier cas et la méthode des moindres carrés dans le second cas.

Sur le plan opérationnel, dans les deux cas, l'algorithme proposé utilise une version paramétrée de la surface. La modélisation surfacique peut être locale ou globale selon la complexité de sa forme. Dans le cas de surfaces fermées, une approche plus locale sera préférée pour s'adapter aux possibles courbures fortes de la forme.

La phase de reconstruction peut être réalisée à partir de la seule information des coordonnées des points sélectionnés mais elle peut aussi utiliser une pondération locale s'appuyant sur un attribut sismique caractéristique de l'événement sismique étudié. Dans le cas d'une fracture, un attribut de cohérence peut être utilisé. Un tel attribut est décrit dans la littérature géophysique, par exemple dans le brevet US-5,563,949. Cette reconstruction permet de recaler la fracture lors de sa synthèse, voire de texturer sa surface.

Par ailleurs, la fracture reconstruite peut être affichée et observée dans n'importe quelle direction et sous n'importe quel angle.

Une étape de reconstruction et d'affichage de la fracture peut aussi être effectuée pendant les étapes d'affichage d'une séquence et de sélection des points ; la fracture est alors reconstruite, affichée et actualisée après chaque sélection de point.

Pendant l'affichage de la fracture reconstruite, il est possible de superposer ladite fracture avec un plan de coupe. Le plan de coupe peut masquer l'une des parties de la fracture par clipping de la surface reconstruite. Ainsi une partie de la fracture ne bloquera pas l'observation d'une autre partie.

Il est également possible de ne visualiser que l'intersection du plan de coupe avec la fracture reconstruite pour observer une simple coupe du plan de fracture.

Le plan de coupe peut en outre se déplacer le long d'une trajectoire déterminée par l'utilisateur. La trajectoire peut d'ailleurs être celle fournie par l'utilisateur pour la détermination des sections 10 à afficher. Ce déplacement permet de mieux suivre les variations de la fracture reconstruite grâce la sensibilité de la perception visuelle au mouvement.

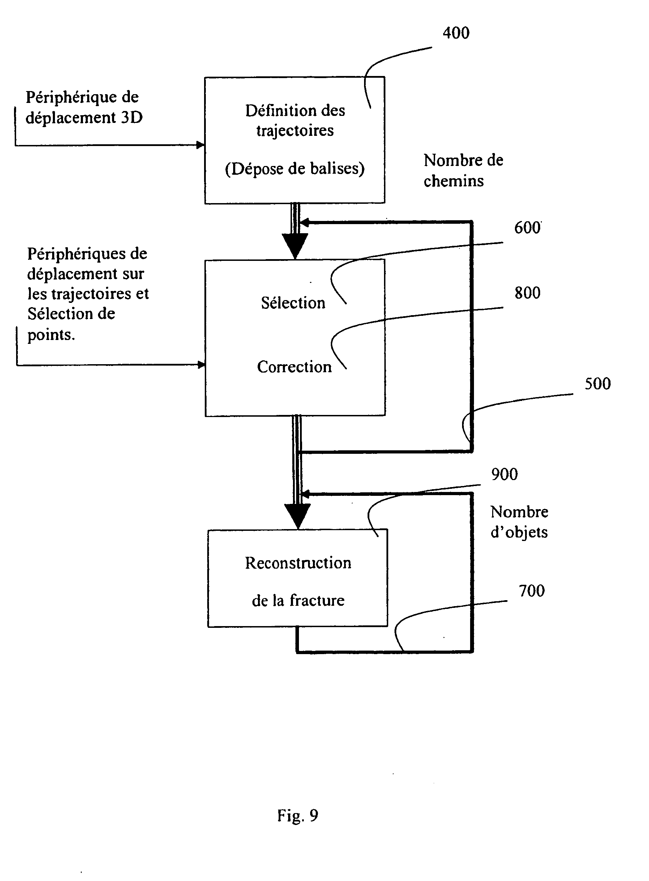

La figure 9 montre un schéma du procédé comprenant l'étape de définition 400 de trajectoires 40 suite à une dépose de balises. La dépose de balise se réalise en opérant un périphérique de déplacement tridimensionnel. L'étape 400 amène à l'étape de sélection de points 600 appartenant au plan de fracture au cours du déplacement sur les différentes trajectoires 40. Chaque étape de sélection de points 600 peut être suivie d'une étape de correction 800 qui permet de supprimer certains points sélectionnés. Si plusieurs trajectoires 40 ont été définies lors de l'étape de définition de trajectoires 400, il est possible de répéter les étapes de sélection 600 et de correction 800 pour chacune des trajectoires en mémorisant pour chaque trajectoire les points sélectionnés lors des déplacements le long des trajectoires précédentes. Enfin, une fois les points sélectionnés, le procédé peut passer à l'étape de reconstruction 900 du plan de fracture, ou de plusieurs plans de fracture si la sélection des points s'est opérée sur des plans de fracture distincts.

En effet, si l'événement pointé se décompose en plusieurs trajectoires représentant chacune un objet indépendant, i.e. plan de fracture, alors une stratégie séquentielle peut s'appliquer lors de la reconstruction. Sur le schéma de la figure 4, ce principe s'illustre par la répétition des étapes de sélection et correction 500 ou par la répétition de l'étape de reconstruction 700. Un réseau de fractures est un bon exemple, chacune des fractures pouvant être traitée de façon indépendante.

Cependant, si la sélection de points d'un événement à reconstruire s'opère le long de plusieurs trajectoires et que cet événement consiste en un unique plan de fracture, l'étape de reconstruction doit s'appuyer sur l'ensemble des pointés.

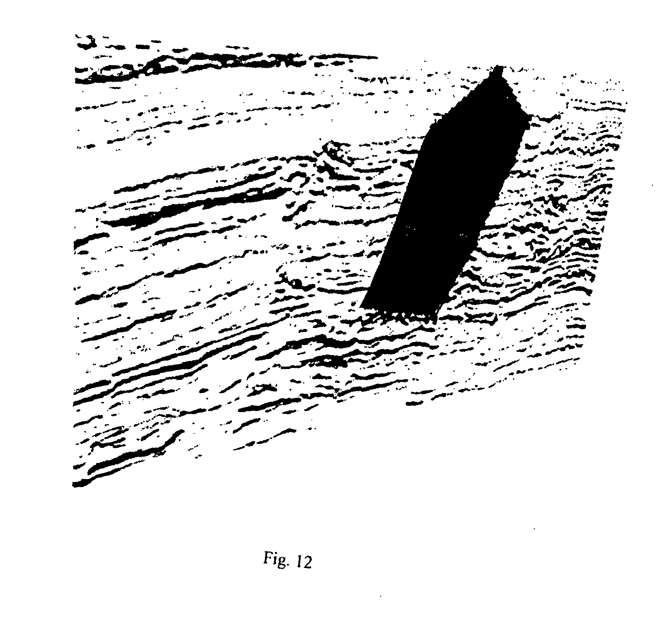

Les figures 10 à 12 montrent les résultats de l'invention, dans un exemple. La figure 10 montre les points obtenus par pointé dynamique, au cours de l'affichage des sections successives d'une séquence. La figure 11 montre les résultats d'une étape de réduction du nuage de points. La figure 12 montre les résultats d'une reconstruction en trois dimensions du plan de fracture.

Il est proposé également un programme mettant en oeuvre le procédé décrit préalablement. Le programme peut comprendre une routine de réception d'un bloc tridimensionnel 20 de valeurs, une routine d'affichage de points de cet ensemble sous forme d'une succession de sections 10 planes du bloc tridimensionnel 20, une routine de sélection, pendant l'affichage, de points choisis par un utilisateur sur certaines des sections 10 affichées, et une routine de reconstruction et d'affichage d'une surface à partir des points sélectionnés.

Ce programme permet notamment d'améliorer l'art antérieur en affichant une animation d'une succession de sections 10 dans un bloc tridimensionnel 20.

Le programme présente l'ensemble des avantages attribués au procédé.

Il est proposé également un système comprenant une mémoire contenant le programme décrit précédemment, une unité logique de traitement du programme, une unité d'affichage et un dispositif d'entrée sortie permettant le pointage sur l'unité d'affichage. Ce système présente les mêmes avantages que ceux attribués au procédé et au programme.

## Revendications

1. Procédé de reconstruction d'un plan de fracture dans un ensemble tridimensionnel (20) de valeurs, comprenant les étapes de :
- fourniture à un ordinateur de l'ensemble tridimensionnel (20)
**caractérisé en ce que** le procédé comprend en outre les étapes de :
- affichage par l'ordinateur d'une succession de sections (10) planes de l'ensemble tridimensionnel (20);
- sélection par l'utilisateur de points du plan de fracture sur certaines de ces sections (10) pendant l'affichage de la succession de sections (10) planes; et de
- reconstruction par l'ordinateur du plan de fracture à partir des points sélectionnés,
dans lequel :
- le procédé comprend en outre une étape de fourniture par l'utilisateur d'une trajectoire (40) à l'aide de balises dans le bloc tridimensionnel (20), l'affichage des sections (10) à l'étape d'affichage étant orthogonalement à la trajectoire (40) fournie.

2. Le procédé selon les revendications 1, dans lequel l'étape d'affichage comprend l'affichage des sections (10) à une même échelle.

3. Le procédé selon l'une des revendications 1 à 2, dans lequel l'étape d'affichage comprend l'affichage des sections (10) à une vitesse supérieure à 5 images par seconde, et de préférence entre 10 et 20 images par seconde.

4. Le procédé selon l'une des revendications 1 à 3, comprenant en outre un choix par l'utilisateur de la distance entre deux sections (10) successives.

5. Le procédé selon l'une des revendications 1 à 4, comprenant en outre une mémorisation des sélections de points et une répétition des étapes d'affichage et de sélection pendant lesquelles les points mémorisés sont affichés.

6. Le procédé selon l'une des revendications 1 à 5, comprenant en outre une édition des points sélectionnés.

7. Le procédé selon l'une des revendications 1 à 6, dans lequel les étapes de sélection des points et de reconstruction de la fracture sont simultanées.

8. Le procédé selon l'une des revendications 1 à 7, comprenant en outre une étape d'affichage de la fracture reconstruite.

9. Le procédé selon la revendication 8, dans lequel l'étape d'affichage de la fracture reconstruite comprend le masquage par un plan de coupe d'une partie de la surface.

10. Le procédé selon la revendication 9, dans lequel l'étape d'affichage de la fracture reconstruite comprend le déplacement du plan de coupe.

11. Un programme d'ordinateur enregistré sur un support lisible par ordinateur, comprenant du code de programme adapté à la mise en oeuvre sur un ordinateur de l'ensemble des étapes du procédé selon l'une des revendications 1 à 10.

12. Un système comprenant :
- des moyens adaptés à la mise en oeuvre du programme selon la revendication 11;
- une unité logique de traitement du programme ;
- une unité d'affichage; et
- un dispositif d'entrée sortie permettant un pointage sur l'unité d'affichage.

## Claims

1. Method for the reconstruction of a fracture plane in a three-dimensional set (20) of values, comprising the steps of:
- providing a computer with the three-dimensional set (20);
**characterized in that** the method further comprises the steps of:
- displaying by the computer a succession of surfaces (10) of the three-dimensional set (20);
- selecting by the user points of the fracture plane over some of these surfaces (10) during the display of the succession of surfaces (10) ; and
- reconstructing by the computer the fracture plane from the selected points, in which
the method further comprising the provision by the user of a trajectory (40) using markers in the three-dimensional block (20), the display of the surfaces (10) at the display step being orthogonal to the trajectory (40) supplied.

2. The method according to claim 1, wherein the displaying step comprises display of the surfaces (10) on the same scale.

3. The method according to one of claims 1 to 2, wherein the displaying step comprises the display of the surfaces (10) at a speed greater than 5 images per second, and preferably between 10 and 20 images per second.

4. The method according to one of claims 1 to 3, also comprising a step wherein the user chooses the distance between two successive surfaces (10).

5. The method according to one of claims 1 to 4, also comprising a storage of the selections of points and a repetition of the display and selection steps during which the stored points are displayed.

6. The method according to one of claims 1 to 5, also comprising editing the selected points.

7. The method according to one of claims 1 to 6, wherein the steps of selection of the points and reconstruction of the fracture are simultaneous.

8. The method according to one of claims 1 to 7, further comprising a step of displaying the reconstructed fracture.

9. The method according to claim 8, in which the step of display of the reconstructed fracture comprises the masking by a planigraphic plane of part of the surface.

10. The method according to claim 9, wherein the step of display of the reconstructed fracture comprises the displacement of the planigraphic plane.

11. A computer program recorded on a computer-readable medium, comprising a program code suitable for implementation of all the steps of the method according to one of claims 1 to 10 on a computer.

12. A system comprising:
- means adapted for implementing the program according to claim 11,
- a program processing logic unit;
- a display unit; and
- an input/output unit allowing pointing on the display unit.

## Patentansprüche

1. Verfahren zur Fehleroberflächenkonstruktion in einem dreidimensionalen Bereich (20) von Werten, das die folgenden Schritte umfasst:
- Lieferung des dreidimensionalen Bereichs (20) an einen Computer,
**dadurch gekennzeichnet, dass** das Verfahren ferner die folgenden Schritte umfasst:
- Anzeige einer Folge von ebenen Schnitten (20) des dreidimensionalen Bereichs (20) durch den Computer;
- Auswahl von Punkten der Fehleroberfläche auf einigen dieser Schnitte (10) durch den Benutzer während der Anzeige der Folge von ebenen Schnitten (10); und der
- Konstruktion der Fehleroberfläche durch den Computer ausgehend von den ausgewählten Punkten,
wobei:
- das Verfahren ferner einen Schritt der Lieferung einer Trajektorie (40) mittels Markierungen im dreidimensionalen Block (20) durch den Benutzer umfasst, wobei die Anzeige der Schnitte (10) im Schritt der Anzeige orthogonal zur gelieferten Trajektorie (40) ist.

2. Verfahren nach Anspruch 1, wobei der Schritt der Anzeige die Anzeige der Schnitte (10) in einem gleichen Maßstab umfasst.

3. Verfahren nach einem der Ansprüche 1 bis 2, wobei der Schritt der Anzeige die Anzeige der Schnitte (10) mit einer Geschwindigkeit von über 5 Bildern pro Sekunde, vorzugsweise zwischen 10 und 20 Bildern pro Sekunde, umfasst.

4. Verfahren nach einem der Ansprüche 1 bis 3, das ferner eine Auswahl der Distanz zwischen zwei aufeinander folgenden Schnitten (10) durch den Benutzer umfasst.

5. Verfahren nach einem der Ansprüche 1 bis 4, das ferner eine Speicherung der Punktauswahlen und eine Wiederholung der Schritte der Anzeige und der Auswahl umfasst, während denen die gespeicherten Punkte angezeigt werden.

6. Verfahren nach einem der Ansprüche 1 bis 5, das ferner eine Bearbeitung der ausgewählten Punkte umfasst.

7. Verfahren nach einem der Ansprüche 1 bis 6, wobei die Schritte der Auswahl der Punkte und der Konstruktion des Fehlers simultan erfolgen.

8. Verfahren nach einem der Ansprüche 1 bis 7, das ferner einen Schritt der Anzeige des konstruierten Fehlers umfasst.

9. Verfahren nach Anspruch 8, wobei der Schritt der Anzeige des konstruierten Fehlers die Maskierung eines Abschnitts der Fläche durch eine Schnittoberfläche umfasst.

10. Verfahren nach Anspruch 9, wobei der Schritt der Anzeige des konstruierten Fehlers die Verschiebung der Schnittoberfläche umfasst.

11. Computerprogramm, das auf einem maschinenlesbaren Medium gespeichert ist, das Programmcode umfasst, der zur Ausführung sämtlicher Schritte des Verfahrens nach einem der Ansprüche 1 bis 10 auf einem Computer angepasst ist.

12. System, das Folgendes umfasst:
- Mittel, die zur Ausführung des Programms nach Anspruch 11 geeignet sind;
- eine logische Einheit zur Verarbeitung des Programms;
- eine Anzeigeeinheit; und
- eine Eingangs/Ausgangsvorrichtung, die ein Zielen auf der Anzeigeeinheit ermöglicht.
